(19) Europäisches Patentamt
European Patent Office
Office européen des brevets

(11) **EP 2 285 116 A2**

(12) **EUROPEAN PATENT APPLICATION**

(43) Date of publication:
**16.02.2011 Bulletin 2011/07**

(51) Int Cl.:
***H04N 7/26*** (2006.01)    ***H04N 17/00*** (2006.01)

(21) Application number: **10168086.6**

(22) Date of filing: **01.07.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **09.07.2009 JP 2009163124**

(71) Applicant: **Sony Corporation Tokyo (JP)**

(72) Inventors:
- **Nagara, Toru TOKYO (JP)**
- **Ihara, Keigo TOKYO (JP)**
- **Irie, Motosuke TOKYO (JP)**

(74) Representative: **Thévenet, Jean-Bruno et al Cabinet Beau de Loménie 158, rue de l'Université 75340 Paris Cédex 07 (FR)**

(54) **Image receiving apparatus, image receiving method, and image transmitting apparatus**

(57)    An image receiving apparatus (200) includes: an image data receiver (204) which receives image data wirelessly transmitted from an external apparatus; and a transmission path state detector (207) which detects a state of a wireless transmission path on the basis of a degree of deviation from an average value of pixel data of pixels in a time direction in a still image region of the image data received by the image data receiver (204).

FIG. 4

**EP 2 285 116 A2**

**Description**

BACKGROUND OF THE INVENTION

1. Field of the Invention

The Invention to an image receiving apparatus, an image receiving method, and an image transmitting apparatus, and more particularly, to an image receiving apparatus and the like of receiving image data from an external apparatus via a wireless transmission path.

2. Description of the Related Art

In the past, there was suggested a wireless transmission system capable of improving transmission efficiency by determining a necessary transmission speed and a transmission power in accordance with the state of a transmission path, that is, transmission quality and performing optimization (for example, see Japanese Unexamined Patent Application Publication No.2005-341031). In a digital wireless transmission system, transmission quality is generally evaluated by use of a transmission error rate (for example, see Japanese Unexamined Patent Application Publication No.2004-64300).

However, when image data is transmitted wirelessly, some errors have a small influence on viewer perception depending on the error details and the transmission error rate does not necessarily reflect the quality of a received image. For example, when an error occurs in a bit of the MSB side upon transmitting 8-bit image data, the error can be visually recognized. However, when an error occurs in a bit of the LSB side, the error may be rarely recognized from a visual standpoint.

In controlling transmission speed in accordance with the transmission error rate, the transmission speed is generally restrained when the transmission error rate is increased. However, as described above, the transmission error rate does not necessarily reflect the quality of the received image. Therefore, even when the transmission error rate is high, a method of not restraining the transmission speed ins in that the quality of the received image is good.

In PSNR (Peak Signal Noise Ratio) is well known as information to evaluate the quality of a compressed image such as MPEG (Moving Picture Expert Group) (for example, see Fran Fitzek, Patric Seeling and Martin Reisslein "VideoMeter tool for YUV bitstreams" Technical Report acticom -02-001, 05 October 2002). PSNR compares a reference image to a measurement image (in an image compression method such as MPEG, an image is compressed and decompressed) in a pixel unit, calculates a difference square value of pixels, and divides the difference square value by a square of the maximum amplitude.

SUMMARY OF THE INVENTION

As described above, the transmission error rate does not necessarily reflect the quality of the received image. Therefore, when image data is transmitted wirelessly, it is difficult to appropriately control a transmission speed, a transmission power, and the like depending on the transmission error rate.

When a transmission path state, that is, transmission quality is evaluated, use of the above-described PSNR may be taken into consideration, instead of the transmission error rate. In order to obtain PSNR, a reference image is necessary. However, in a wireless transmission environment, the method of acquiring the reference image has to be solved.

It is desirable to provide a technique capable of acquiring detection information of a transmission path state (transmission quality) to which the quality of a received image is reflected, and appropriately controlling transmission speed, transmission power, and the like.

According to an embodiment of the invention, there is provided an image receiving apparatus including: an image data receiver which receives image data wirelessly transmitted from an external apparatus; and a transmission path state detector which detects a state of a wireless transmission path on the basis of a degree of deviation from an average value of pixel data of pixels in a time direction in a still image region of the image data received by the image data receiver.

According to an embodiment of the invention, there is provided an image transmitting apparatus including: an image data transmitter which wirelessly transmits image data to an external apparatus; an information receiver which wirelessly receives detection information, which indicates a state of a wireless transmission path detected on the basis of a degree of deviation from an average value of pixel data of pixels in a time direction in a still image region of the image data received in the external apparatus, from the external apparatus; and a wireless controller which controls the image data transmitter on the of the detection information received by the information receiver and the of the wireless transmission path.

In the of the invention, the image data wirelessly transmitted by the image data of the image transmitting apparatus is received by the image data of the image receiving apparatus. The transmission path state detector oaf the image receiving apparatus the state (transmission quality) of the wireless transmission own the basis of the received image data.

The transmission path state detector detects the state of the wireless transmission path on the basis of the degree of deviation from the average value of pixel data of pixels in a time direction in the still image region of the received image data. For example, the transmission path state detector may calculate a PSNR using the pixel data of each pixel of the still image region and a reference value, which is the average value of the pixel data of the in the time direction, and thus the PSNR is calculated as detection information.

For example, the image receiving apparatus may include a still image determiner. Therefore, the transmission path state detector may use the determination result of the still image determiner as information regarding the still image region. In this case, the still image determiner determines whether each pixel of an image is a pixel of the still image region on the basis of the received image data. For example, the image receiving apparatus may include an information receiver which wirelessly receives determination information, which indicates whether each pixel of the image is a pixel of the still image region, from the image transmitting apparatus. Therefore, the transmission path state detector may use the determination information received by the information receiver as information regarding the still image region.

For example, the image data receiver of the image receiving apparatus may receive image data for display and receive still image data for transmission path state detection from the image data transmitter of the image transmitting apparatus. The transmission path state detector may detect the state of the wireless transmission path by using the still image data for transmission path state detection received by the image data receiver. In this case, the image receiving apparatus may not execute the still image determination. Moreover, the determination information indicating whether each pixel is a pixel of the still image region is transmitted from the image transmitting apparatus and the image receiving apparatus may not receive the determination information.

For example, the detection information of a transmission information, detector is wirelessly transmitted by the information transmitter of the image receiving apparatus and is received by the information receiver of the image transmitting apparatus. A controller for the image transmitting apparatus the image data own the basis of the received detection information.

As described above, the transmission path state detector of the image receiving apparatus detects the of the wireless transmission path on the basis of the degree of deviation from the average value of pixel data of pixels in a time direction in the still region of the received image data. Therefore, the quality of the received image is reflected on the detection information obtainable in the transmission path state detector. For example, the image transmitting apparatus can appropriately control the transmission speed, the transmission power, and the like on the basis of the detection information.

According to the embodiments of the invention, the detection information regarding the state (transmission quality) of the transmission path to which the quality of the received image is reflected on the receiving side can be acquired. On the transmitting side, the transmission speed, the transmission power, and the like can be appropriately controlled using the detection information.

BRIEF DESCRIPTION OF THE DRAWINGS

Fig. 1 is a block diagram illustrating an exemplary configuration of an image transmitting system according to an embodiment.

Fig. 2 is a block diagram illustrating an exemplary configuration of a video storage apparatus of an image transmitting system.

Fig. 3 is a block diagram illustrating an exemplary configuration of an image encoding unit of the video storage apparatus.

Fig. 4 is a block diagram illustrating an exemplary configuration of a monitor apparatus of the image transmitting system.

Fig. 5 is a block diagram illustrating an exemplar configuration of an image decoding unit of the monitor apparatus.

Fig. 6 is a block diagram illustrating an exemplary configuration of a PSNR processing unit of the monitor apparatus.

Fig. 7 is a flowchart illustrating the sequence of a PSNR calculation process on each frame by a PSNR calculator of the PSNR processing unit.

Fig. 8 is a block diagram illustrating another exemplary configuration of the PSNR unlit of the monitor apparatus.

Fig. 9 is a flowchart illustrating the sequence of a PSNR calculation process on each frame by a PSNR calculator of the PSNR processing unit.

Fig. 10 is a flowchart illustrating encoding setting and transmission power setting in the video storage apparatus.

Fig. 11 is a block diagram illustrating another exemplary configuration of the video storage apparatus of the video transmitting system.

Fig. 12 is a block diagram an exemplary configuration of a still image determining unit of the video storage apparatus.

Fig. 13 is a block diagram illustrating another exemplary configuration of the PSNR processing unit of the monitor apparatus.

Fig. 14 is a block diagram illustrating another exemplary configuration of the PSNR unlit of the monitor apparatus.

Fig. 15 is a flowchart illustrating the sequence of a PSNR calculation process can each frame by a PSNR calculator of the PSNR processing unit.

Fig. 16 is a block diagram illustrating another exemplary configuration of an image transmitting system.

Fig. 17 is a block diagram illustrating exemplary configurations of a video storage apparatus and a wireless communication apparatus of an image transmitting system.

Fig. 18 is a block diagram illustrating exemplary configurations of a monitor apparatus and a wireless communication apparatus of an image transmitting system.

Fig. 19 is a diagram illustrating the overall structure of a wireless packet containing still image data for transmission path state detection.

DESCRIPTION OF THE PREFERRED EMBODIMENTS

Hereinafter, a preferred embodiment of the invention will be described. The description will be made as following order.

1. Embodiment
2. Modified Examples

1. Embodiment

Configuration of Image Transmitting System

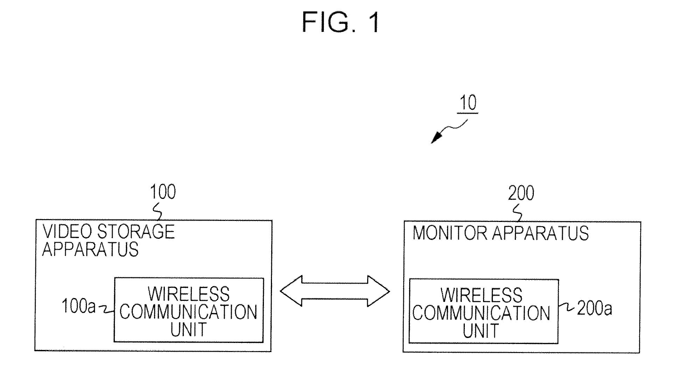

An embodiment of the invention will be described. Fig. 1 is a diagram illustrating an exemplary configuration of an image transmitting system 10 according to the embodiment. The image transmitting system 10 includes a video storage apparatus 100 serving as an image transmitting apparatus and a monitor apparatus 200 serving as an image receiving apparatus.

Radio communication is executed between the video storage apparatus 100 and the monitor apparatus 200. That is, the video storage Apparatus 100 includes a wireless communication unit 100a. The monitor apparatus 200 also include a wireless communication unit 200a. Image data is transmitted the video storage apparatus 100 to the monitor apparatus 200. Control information is transmitted and received between the video storage apparatus 100 and the monitor apparatus 200,

The monitor apparatus 200 detects the state of a wireless transmission path on the basis of the degree of deviation (declination) from the average value of the pixel data of the pixels in the time direction in the still image region of the image data transmitted from the video storage apparatus 100. Information regarding this detection is transmitted as control information from the monitor apparatus 200 to the video storage apparatus 100. The video apparatus 100 controls a transmission speed, a transmission power, and the like of the image data on the basis of the information regarding this detection. In this way, in the monitor apparatus 200, certain quality is maintained as the quality of an image to be obtainable from the received image data.

Exemplary Configurations of Video Storage Apparatus and Monitor Apparatus

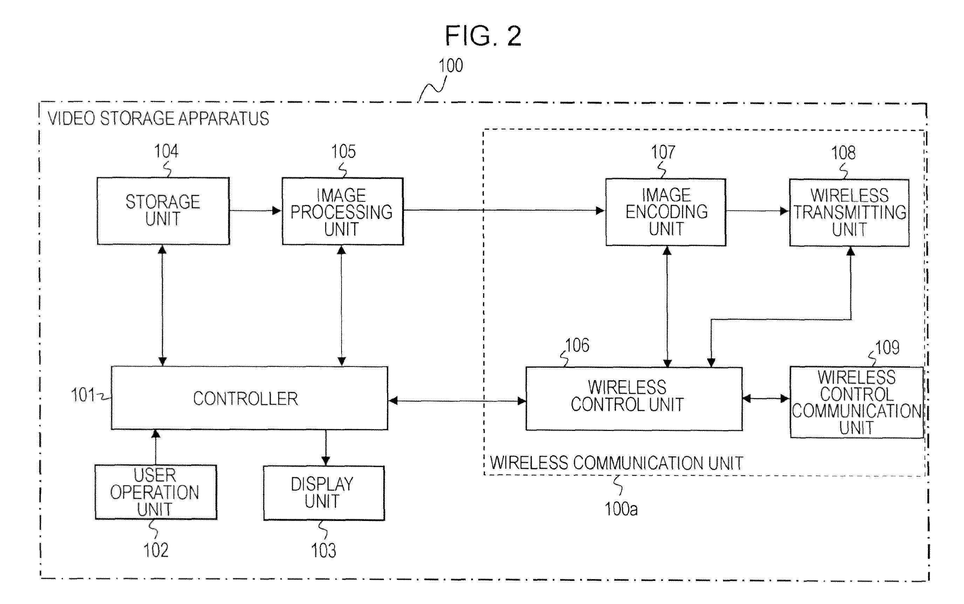

Exemplary configurations of the video storage apparatus 100 and the monitor apparatus 200 will be described. First, the exemplary configuration of the video storage apparatus 100 will be described. Fig. 2 is a diagram illustrating the exemplary configuration of the video storage apparatus 100. The video storage apparatus 100 includes a controller 101, a user operation unit 102, a display unit 103, a storage unit 104, an image processing unit 105, a wireless control unit 106, an image encoding unit 107, a wireless transmitting unit 108, and a wireless control communication unit 109. Here, the wireless control unit 106, the image encoding unit 107, the wireless transmitting unit 108, and the wireless control communication unit 109 form a wireless communication unit 100a.

The controller 101 controls the operation of each unit of the video storage apparatus 100. The controller 101 includes a CPU (Central Processing Unit), a ROM (Read-Only Memory), and a RAM (Random Access Memory). The ROM stores a control program and the like of the CPU. The RAM temporarily stores data necessary in a control process of the CPU. The CPU develops a program or data read from the ROM on the RAM, activates the program or the data, and controls the operation of unit of the video storage apparatus 100.

User operation unit 102 and the display unit 103 form a user interface and are connected to the controller 101. The user operation unit 102 includes a key, a button, and a dial disposed in a case (not shown) of the video storage apparatus 100 or includes a touch panel disposed on the display surface of the display unit 103 or a remote controller. The display unit 103 includes an LCD (Liquid Crystal Display).

The unit 104 includes a storage such as a HDD (Hard Disk) or a semiconductor memory. The storage stores an image file of each image contents. Each image file contains image data compressed by a predetermined encoding method such as the MPEG method. When a user the contents to reproduce the contents, the storage unit 104 reads and outputs the image data of the image contents selected from the sunder the control of the controller 101. The image processing unit 105 executes a decoding process on the image data read from the storage unit 104 to obtain reproduction image data of non-compression (baseband).

Under the control of the controller 101, the wireless control unit 106 controls the operations of the image encoding unit 107, the wireless transmitting unit 108, and the wireless control communication unit 109. The image encoding unit 107 executes a wireless encoding process on the reproduction image data of non-compression obtainable in the image processing unit 105 to obtain image data for transmission.

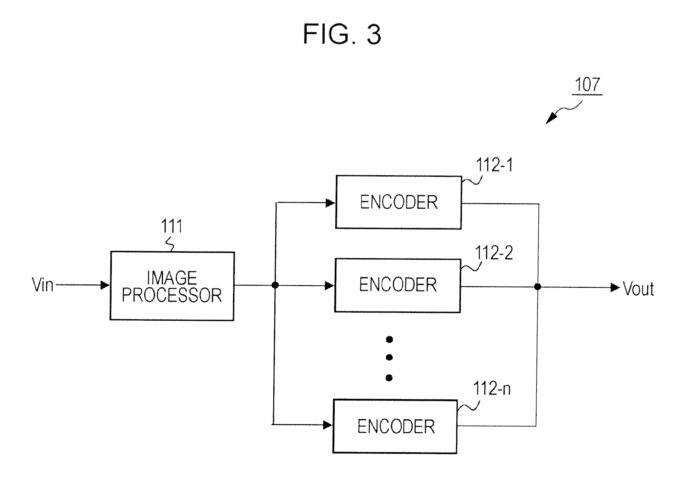

Fig. 3 is a diagram illustrating an exemplary configuration of the image encoding unit 107. The image encoding unit 107 includes an image processor 111 and n (where n is an integer equal to or larger than 2) encoders 112-1 to 112-n. For example, the image processor 111 separates pixel data of each of the pixels forming input image data Vin into upper bits and lower bits. For example, the image processor 111 divides the input image data Vin into blocks, executes a DCT (Discrete Cosine Transform) process, transforms the blocks into frequency components, and separates the frequency components into low-pass components and high-pass components. In this case, under the control of the wireless controller 106, the image processor 111 executes a process of not transmitting the unnecessary high-pass component to the encoders by changing the encoding position of the high-pass component.

The n encoders 112-1 to 112-n encode data in accordance with different wireless encoding method. The image data processed by the image processor 111 is input to any one of the n encoders 112-1 to 112-n and is encoded under the control of the wireless control unit 106. In this case, important data is processed by an encoding method with a high correction capability.

For example, when the image processor 111 separates each pixel data of the input image data Vin into upper bits and lower bits, the are selected as follows. That is, the encoders utilizing an encoding method with a high correction capability are selected for the upper bits. The encoders utilizing an encoding method with a low correction capability are selected for the lower bits.

For example, when the input image data Vin is divided into blocks and is to the DCT to be separated the low-pass components and the high-pass components, the encoders are was follows. That is, the encoders utilizing an encoding method with a high correction capability are selected for the low-pass components. The encoders utilizing an encoding method with a low correction capability are selected for the high-pass components.

Encoding setting (setting of a process executed by the image processor 111 and setting of the process of selecting the encoder among the encoders 112-1 to 112-n) of the image encoding unit 107 is executed by the wireless control unit 106, as described above. In the wireless control unit 106, control of a transmission speed is possible by the encoding setting of the image encoding unit 107.

In Fig. 2, the wireless transmitting unit 108 generates wireless packets for data streaming transmission containing the image data output from the image encoding unit 107. Here, one wireless packet for data streaming transmission contains image data corresponding to one frame, for example. The wireless transmitting unit 108 wirelessly transmits the wireless packet for data streaming transmission generated in this way to the monitor apparatus 200. The wireless control unit 106 can control the transmission power of the wireless transmitting unit 108. Here, the wireless transmitting unit 108 forms an image data transmitter.

The wireless control communication unit 109 generates a wireless packet for transmission of control information transmission. The wireless packet for transmission of the control information contains various kinds of control information supplied from the wireless control unit 106. The wireless control communication unit 109 wirelessly transmits the wireless packet for transmission of the control information generated in this manner to the monitor apparatus 200. As one piece of the control information contained in the wireless packet, there is encoding setting information of the above-described image encoding unit 107. Here, the wireless control communication unit 109 forms an information transmitter.

The wireless control communication unit 109 receives the wireless packet for transmission of the control information wirelessly transmitted from the monitor apparatus 200 and supplies various kinds of control information in the wireless packet to the wireless unit 106. As one or the control information contained in the wireless packet, there is detection information (PSNR in this embodiment) regarding the state of a wireless transmission path in the monitor apparatus 200. Here, the wireless control communication unit 109 forms an information receiver.

The wireless control unit 106 controls the encoding setting of the image encoding unit 107 and transmission power of the wireless transmitting unit 108 on the basis of the detection information regarding the state of the wireless transmission path. That is, the wireless control unit 106 controls the detection information, which is transmitted from the monitor apparatus 200, regarding the state of the wireless transmission path, that is, the transmission speed, the transmission power, and the like so that PSNR is 40 dB or more, for example. In this case, when PSNR is smaller than 40 dB, the transmission is controlled so as to be or the transmission power is controlled so as to be increased.

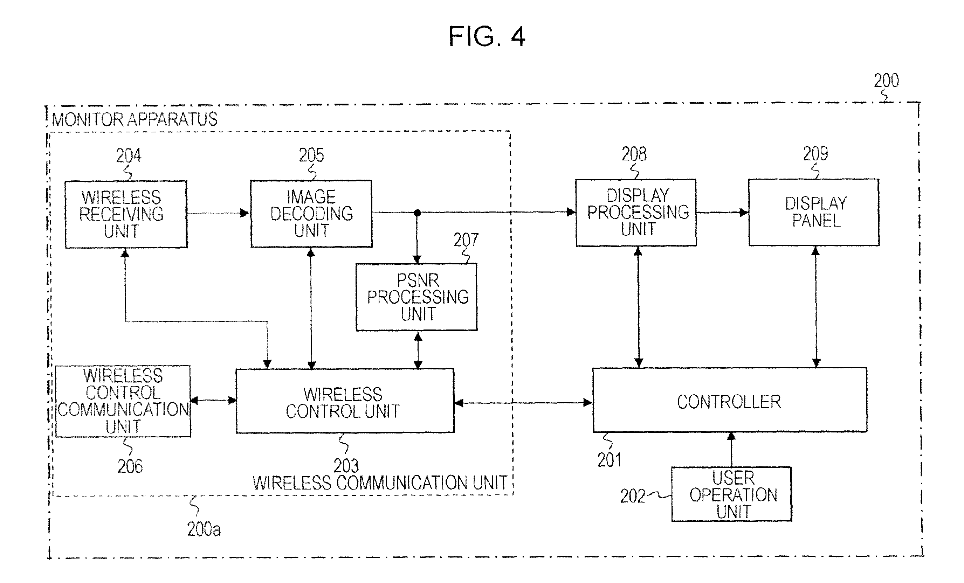

Next, the exemplary configuration of the monitor apparatus 200 will be described. Fig. 4 is a diagram illustrating the exemplary configuration of the monitor apparatus 200. The monitor apparatus 200 includes a controller 201, a user operation unit 202, a wireless control unit 203, a wireless receiving unit 204, an image decoding unit 205, a wireless control communication unit 206, a PSNR processing unit 207, a display processing unit 208, and a display panel 209. Here, the wireless control unit 203, the wireless receiving unit 204, the image decoding unit 205, the wireless control communication unit 206, and the PSNR processing unit 207 form a wireless communication unit 200a.

The controller 201 controls the operation of each unit of the monitor apparatus 200. The controller 201 includes a CPU, a ROM, and a RAM, as in the controller 101 of the above-described video storage apparatus 100. The ROM stores a control program and the like of the CPU. The RAM temporarily stores data necessary in a control process of the CPU. The CPU develops a program or data read from the ROM on the RAM, activates the program or the data, and controls the operation of each unit of the monitor apparatus 200. The user operation unit 202 forms a user interface and is connected to the controller 201. The user operation unit 202 includes a key, a button, a dial, or a remote controller disposed in a (nowt shown) of the monitor apparatus 200.

Under the control of the controller 101, the wireless control unit 203 controls the operations of the wireless receiving unit 204, the image decoding unit 205, the wireless control communication unit 206, and the PSNR processing unit 207. The wireless control communication unit 206 receives the wireless packet for transmission of the control information transmitted the video storage apparatus 100. The wireless control communication unit 206 extracts various kinds of control information contained in the wireless packet and the extracted various kinds of control information to the wireless unit 203. As one piece of control information in the wireless packet, there is encoding setting of the image unit 107 of the above-described video storage apparatus 100. Here, the wireless control communication unit 206 includes an information receiver.

The wireless control communication unit 206 generates a wireless for transmission of control information. The wireless for transmission of the control information contains various kinds of control information supplied from the wireless control unit 203. The wireless control communication unit 206 wirelessly transmits the wireless packet for transmission of the control information generated in the above-described manner to the video storage apparatus 100. As one piece of control information contained in the wireless packet, there is PSNR which is the detection information regarding the state of the wireless transmission path obtainable from the PSNR processing unit 207. Here, the wireless control communication unit 206 includes an information transmitter.

The wireless receiving unit 204 receives the wireless packet for data streaming transmission transmitted from the video storage apparatus 100. The wireless receiving unit 204 extracts image data contained in each wireless packet. Here, the wireless receiving unit 204 includes an image data receiver. The image decoding unit 205 executes a decoding process on the image data obtained by the wireless receiving unit 204 to obtain reception data, as an opposite process to the process of the image encoding unit 107 of the above-described video storage apparatus 100.

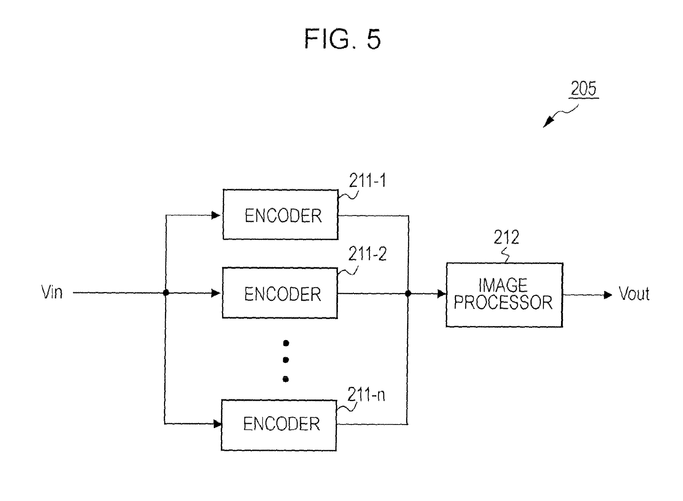

Fig. 5 is a diagram illustrating an exemplary configuration of the image decoding unit 205. The image decoding unit 205 includes n (where n is an integer equal to or larger than 2) decoders 211-1 to 211-n and an image processing unit 212. The n decoders 211-1 to 211-n correspond to the n encoders 112-1 to 112-n (see Fig. 3) of the image encoding unit 107 of the above-described video storage apparatus 100, respectively. The n decoders 211-1 to 211-n decode the encoded image data. The image processing unit 212 corresponds to the image processing unit 111 (see Fig. 3) forming the image encoding unit 107 of the above-described video storage apparatus 100 and executes an opposite process to the process of the image processing unit 111.

The wireless control unit 203 executes decoding setting (setting of selecting the decoder among the decoders 211-1 to 211-n and setting of a process executed by the image processing unit 212) of the image decoding unit 205. In this case, the wireless control unit 203 executes the decoding setting of the image decoding unit 205 so as to execute the decoding process, which is an opposite process to the process of the image encoding unit 107, on the basis of the encoding setting information, which is received by the wireless control communication unit 206, of the image encoding unit 107 of the video storage apparatus 100.

In this case, under the control of the wireless control unit 203, the input image data Vin is decoded by the decoder corresponding to the encoder of the image encoding unit 107 encoding the input image data Vin among the decoders 211-1 to 211-n. The decoded image data is subjected to a combination process, which is an opposite process to the separation process of the image processing unit 111 of the image encoding unit 107, by the Processing unit 212 to generate output data Vout.

In Fig. 4, the PSNR processing unit 207 detects the state of the wireless transmission path on the basis of the image data (received image data) obtained by the image decoding unit 205. The PSNR processing unit 207 calculates a PSNR (Peak Signal Noise Ratio) using pixel data of each pixel in a still image region and a reference value, which is an average value of the pixel data of the pixels in a time direction. The PSNR processing unit 207 supplies the calculated PSNR as the detection information to the wireless control unit 203. The PSNR processing unit 207 includes a transmission path state detector. The PSNR processing unit 207 is described in detail below.

The display processing unit 208 executes processes such as color adjustment, contour enhancement, and superposition of graphics data on the image data (received image data) obtained by the image decoding unit 205. The display panel 209 displays an image of the image data processed by the display processing unit 208. The display panel 209 is formed of an LCD (liquid crystal display), an organic EL (ElectroLuminescence), a PDP (Plasma Display Panel), or the like.

Details of PSNR Processing Unit

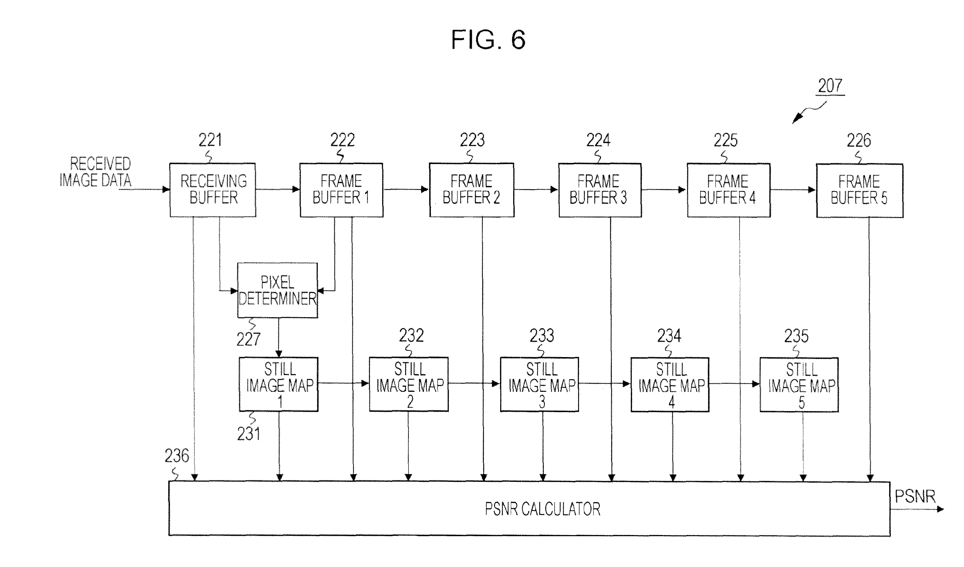

The PSNR processing unit 207 will be described in detail. Fig. 6 is a diagram illustrating an exemplary configuration of the PSNR processing unit 207. The PSNR processing unit 207 includes a receiving buffer memory 221, frame buffer memories 222 to 226, a pixel determiner 227, still image map memories 231 to 235, and a PSNR calculator 236.

The receiving buffer memory 221 temporarily stores the received image data. The frame buffer memories 222 to 226 temporarily store the received image data of the previous frames stored in the receiving buffer memory 221, Since the receiving buffer memory 221 and the frame buffer memories 222 to 226 are connected to each other in series, the received image data corresponding to one frame stored in the receiving buffer memory 22 is sequentially transmitted to the buffer memories of the rear stage. Here, when the received image data of the present frame is stored in the receiving buffer memory 221, the frame buffer memories 222 to 226 stores the image data received before one to five frames.

The pixel determiner 227 determines whether each pixel of an image is a pixel of the still image region on the basis of the received image data of two continuous frames stored in the receiving buffer memory 221 and the frame buffer memory 222. That is, the pixel determiner 227 sequentially sets pixel to notice pixels, evaluates the difference value between the pixel data of the notice pixels of the present frame and one previous frame, and makes the determination. When the difference value is equal to or less than a fixed value, the pixel determiner 227 determines that the pixel is a pixel of the still image region and outputs "1" as a determination result. In other cases, the pixel determiner 227 outputs "0" as a determination result.

The still image map memories 231 to 235 first stores the determination result of each pixel of the image by the pixel determiner 227. Since the still image map memories 231 to 235 are connected to each other in series, the determination result corresponding to one frame stored in the still image map memory 231 is transmitted to the buffer memories of the rear stage sequentially. Here, when the determination result of the present frame is stored in the still image map memory 231, the determination results before one to four frames are stored in the still image map memories 232 to 235.

The PSNR calculator 236 first calculates the PSNR (PSNRY) of luminance data Y, the PSNR (PSNRCb) of blue color difference data, and the PSNR (PSNRCr) of red color difference data of each frame expressed in Expressions (1) to (3). The PSNR calculator 236 calculates an average PSNR (averagePSNRY) of the luminance data Y of each frame expressed in Expression (4) and a total average PSNR (averagePSNRtotal) of a total of the frames expressed in Expression (5) by using the PSNRY, the PSNRCb, and the PSNRCr calculated with the present frame and the previous frame. Even though not described, the received image data obtained by the image decoding unit 205 includes the luminance data Y, the blue color difference data Cb, and the red color difference data Cr.

$$PSNR_Y = 0 - 10\log_{10}\left(\frac{\sum_{x=1}^{Horizontal}\sum_{y=1}^{Vertical}(Y_{xy} - Y_{xyref})^2}{Horizontal \times Vertical}\frac{1}{MaxAmplitude^2}\right) \quad \cdots (1)$$

$$PSNR_{C_b} = 0 - 10\log_{10}\left(\frac{\sum_{x=1}^{Horizontal}\sum_{y=1}^{Vertical}(C_{bxy} - C_{bxyref})^2}{Horizontal \times Vertical}\frac{1}{MaxAmplitude^2}\right) \quad \cdots (2)$$

$$PSNR_{C_r} = 0 - 10\log_{10}\left(\frac{\sum\limits_{x=1}^{Horizontal}\sum\limits_{y=1}^{Vertical}(C_{rxy} - C_{rxyref})^2}{Horizontal \times Vertical} \frac{1}{MaxAmplitude^2}\right) \quad \cdots(3)$$

$$averagePSNR_Y = \frac{\sum\limits_{i=1}^{Frame\_number}(PSNR_Y)}{Frame\_number} \quad \cdots(4)$$

$$averagePSNR_{total} = \frac{\sum\limits_{i=1}^{Frame\_number}(PSNR_Y + PSNR_{C_b} + PSNR_{C_r})}{3 \times Frame\_number} \quad \cdots(5)$$

As described above, the PSNR processing unit 207 calculates the PSNR using the pixel data of each pixel of the still image region and the reference value, which is an average value of the pixel data of the pixels in the time direction. The PSNR calculator 236 determines that the notice pixel is a pixel of the still image region, when the pixels of an image are set to the notice pixels sequentially and the determination results of the notice stored in the still image map memories 231 to 235 are all "1". The PSNR calculator 236 calculates the PSNR using the pixel data of the present frame of each pixel of the still region the reference value, which is an average of the pixel or the in the time direction.

For as for the PSNR (PSNRY) of the luminance data Y in Expression (1), Yxy is the pixel data of the present frame and Yxyref is the reference value which is an average value of the pixel data in the time direction. The reference value can be obtained by averaging the pixel data stored in the receiving buffer memory 221 and the frame buffer memories 222 to 226. Moreover, in Expressions (1) to (3), "MaxAmplitude" indicates the maximum amplitude level of a signal (data), An average value of difference square values of the pixels of the still image region is divided by a square value of the maximum amplitude level and is normalized.

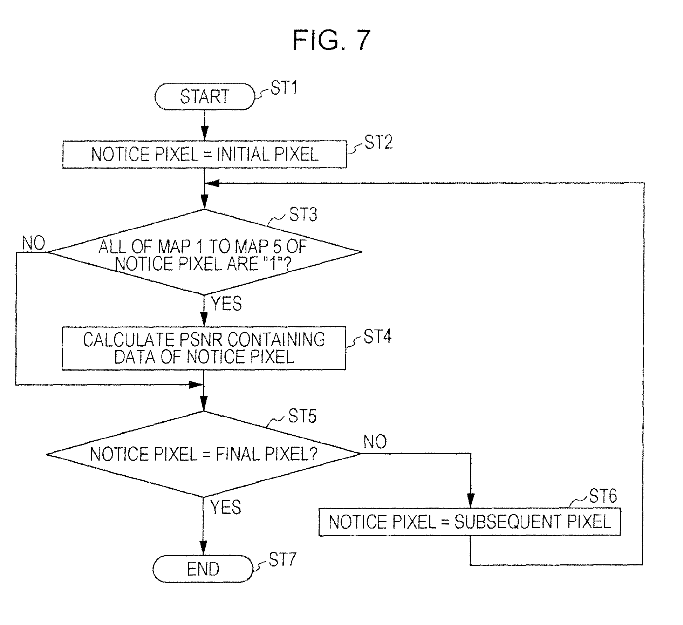

Fig. 7 is a flowchart illustrating the sequence of PSNR calculation process on each frame by the PSNR calculator 236 of the PSNR processing unit 207 in Fig. 6 in Expressions (1) to (3). The PSNR calculator 236 starts the process in step ST1. Subsequently, the process proceeds to step ST2. In step ST2, the PSNR calculator 236 sets an initial pixel of an image, for example, an upper left pixel to the notice pixel.

Subsequently, the PSNR calculator 236 determines whether the determination results of the notice pixels stored in the still image map memories 231 to 235 (map 1 to map 5) are all "1" in step ST3. When the determination results are all "1", the PSNR calculator 236 determines that the notice pixel is a pixel of the still image region. Then, the process proceeds to step SP4. In step ST4, the PSNR calculator 236 executes the calculation of Expressions (1) to (3) to calculate the PSNR by using the data of the notice pixel and the data of all pixels determined as pixels of the still image region until the data.

The PSNR calculator 236 permits the process to proceed to step ST5 after the process of step ST4. Alternatively, when the determination results are not all "1" in step ST3, the PSNR calculator 236 immediately permits the process to proceed to step ST5. In step ST5, the PSNR calculator 236 determines whether the present notice pixel is the final pixel in the image. When the present notice pixel is not the final pixel, the PSNR calculator 236 sets the next pixel of the image to the notice pixel in step ST6, and then the process proceeds to step ST3. Alternatively, when the present notice pixel is the final pixel in step ST5, the PSNR calculator 236 terminates the process in step ST7.

In the sequence of the PSNR calculation process in Fig. 7, the PSNR calculated finally in step ST4 is used as the final PSNR.

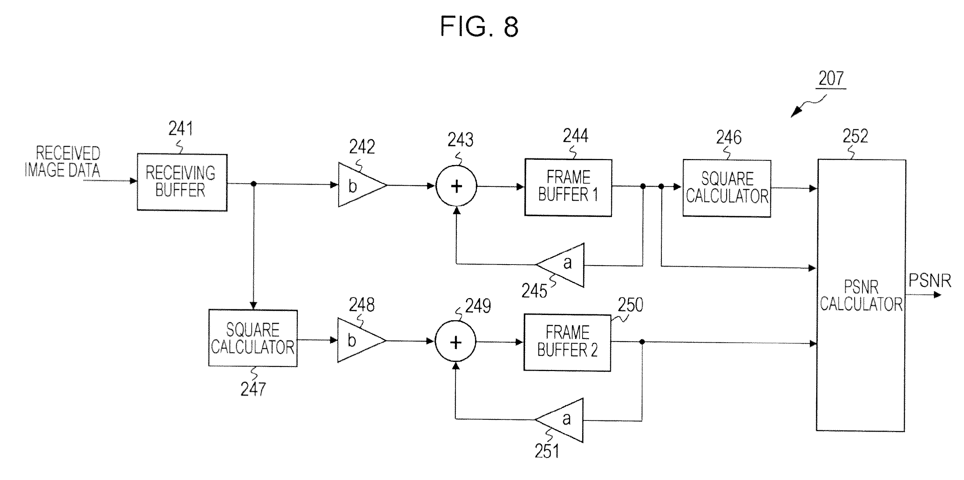

Fig. 8 is a diagram illustrating another exemplary configuration of the PSNR processing unit 207. The PSNR processing unit 207 includes a receiving buffer memory 241, a counter 242, an adder 243, a frame buffer memory 244, a counter 245, and a square calculator 246. Here, the counter 242, the adder 243, the bluffer memory 244, and the counter 245 form an IIR (Infinite Impulse Response) filter. The PSNR processing unit 207 also includes a square calculator 247, a counter 248, an adder 249, a frame buffer memory 250, a counter 251, and a PSNR calculator 252. Here, the counter 248, the adder 249, the frame buffer memory 250, and the counter 251 form an IIR filter

The receiving buffer memory 241 temporarily stores the received image data of in sequence. The received image data of each frame stored in the receiving buffer memory 241 is read, and then the received image data is read from the subsequent frame. A coefficient b is given to the pixel or the pixels of the image forming the received image data read from the receiving buffer memory 241 by the counter 242, and the pixel data is supplied to the adder 243.

The stored or the pixels are sequentially read from the frame buffer memory 244 so as to correspond to the reading of the pixel data of the pixels of the image from the receiving buffer memory 241. A coefficient a is given to the stored data of the pixels read from the frame buffer memory 244 by the counter 245, and stored data is supplied to the adder 243. The adder 243 adds the output data of the counter 245 to the output data of the counter 242, and the added data is written to the same address of the frame buffer memory 244.

Therefore, the data stored in the frame buffer memory 244 is data obtained by averaging the pixel data of the pixels read from the receiving buffer memory 241 in the time direction for each pixel. The stored data of each pixel read from the frame buffer memory 244 is supplied to the PSNR calculator 252. The square calculator 246 executes a square calculation process on the stored data of each pixel read from the frame buffer memory 244 and supplies the processed data to the PSNR calculator 252.

The square calculator 247 executes a square calculation process on the pixel data of the pixels of each frame read from the receiving buffer memory 241. A coefficient b is given to the square data of the pixels obtained by the square calculator 247 by the counter 248, and the square data is supplied to the adder 249. The stored data of the pixels are sequentially read from the frame buffer memory 250 so as to correspond to the reading of the pixel data of the pixels of the image from the receiving buffer memory 241.

The coefficient a is given to the stored data of the pixels read from the frame buffer memory 250 by the counter 251, and the stored data is supplied to the adder 249. The adder 249 adds output data of the counter 251 to the output data of the counter 248, and the added data is written to the same address of the frame buffer memory 250.

Therefore, the data stored in the frame buffer memory 250 is data obtained by averaging the square data of the pixels obtained in the square calculator 247 in the time direction for each pixel. The stored data of the pixels read from the frame buffer memory 250 are supplied to the PSNR calculator 252.

The PSNR calculator 252 first calculates the PSNR (PSNRY) of the luminance data Y, the PSNR (PSNRCB) of blue color data, and the PSNR (PSNRCr) of red color difference data of each frame expressed in Expressions (6) to (8). The PSNR calculator 252 calculates an average PSNR (averagePSNRY) of the luminance data Y of each frame expressed in Expression (9) and a total average PSNR (averagePSNRtotal) of a total of the frames expressed in Expression (10) by using the PSNRY, the PSNRCb, and the PSNRCr calculated with the present frame and the previous frame.

$$PSNR_Y = 0 - 10\log_{10}\left(\frac{\left(\sum_{x=1}^{Horizontal}\sum_{y=1}^{Vertical}Y_{xy}\right)^2 - \sum_{x=1}^{Horizontal}\sum_{y=1}^{Vertical}Y_{xy}^2}{Horizontal \times Vertical} \frac{1}{MaxAmplitude^2}\right) \quad \cdots (6)$$

$$PSNR_{C_b} = 0 - 10\log_{10}\left(\frac{\left(\sum_{x=1}^{Horizontal}\sum_{y=1}^{Vertical}Cb_{xy}\right)^2 - \sum_{x=1}^{Horizontal}\sum_{y=1}^{Vertical}Cb_{xy}^2}{Horizontal \times Vertical} \frac{1}{MaxAmplitude^2}\right) \quad \cdots (7)$$

$$PSNR_{C_r} = 0 - 10\log_{10}\left(\frac{\left(\sum_{x=1}^{Horizontal}\sum_{y=1}^{Vertical}Cr_{xy}\right)^2 - \sum_{x=1}^{Horizontal}\sum_{y=1}^{Vertical}Cr_{xy}^2}{Horizontal \times Vertical} \frac{1}{MaxAmplitude^2}\right) \quad \cdots (8)$$

$$averagePSNR_Y = \frac{\sum_{i=1}^{Frame\_number}(PSNR_Y)}{Frame\_number} \quad \cdots (9)$$

$$averagePSNR_{total} = \frac{\sum_{i=1}^{Frame\_number}(PSNR_Y + PSNR_{C_b} + PSNR_{C_r})}{3 \times Frame\_number} \quad \cdots (10)$$

As described above, the PSNR processing unit 207 calculates the PSNR using the pixel data of each pixel of the still image region and the reference value, which is the average value of the pixel or the pixels in the time direction. The PSNR calculator 252 determines that the notice pixel is a pixel of the still image region, when the pixels of an image are set to the notice pixels sequentially and the difference value between the output data of the square calculator 246 and the stored data read form the frame buffer memory 250 is equal to or less than a fixed value. The PSNR calculator 252 calculates the PSNR using the stored data read from the frame buffer memories 244 and 250.

For example, as for the PSNR (PSNRY) of the luminance data Y in Expression (6), a portion in Expression (11) is calculated with the stored data read from the frame buffer memory 244 and a portion expressed in Expression (12) is calculated with the stored data read from the frame buffer memory 250. In Expressions (6) to (8), "MaxAmplitude" indicates the maximum amplitude level of a signal (data).

$$\left( \sum_{x=1}^{Horizontal} \sum_{y=1}^{Vertical} Y_{xy} \right)^2 \quad \cdots (11)$$

$$\sum_{x=1}^{Horizontal} \sum_{y=1}^{Vertical} Y_{xy}^2 \quad \cdots (12)$$

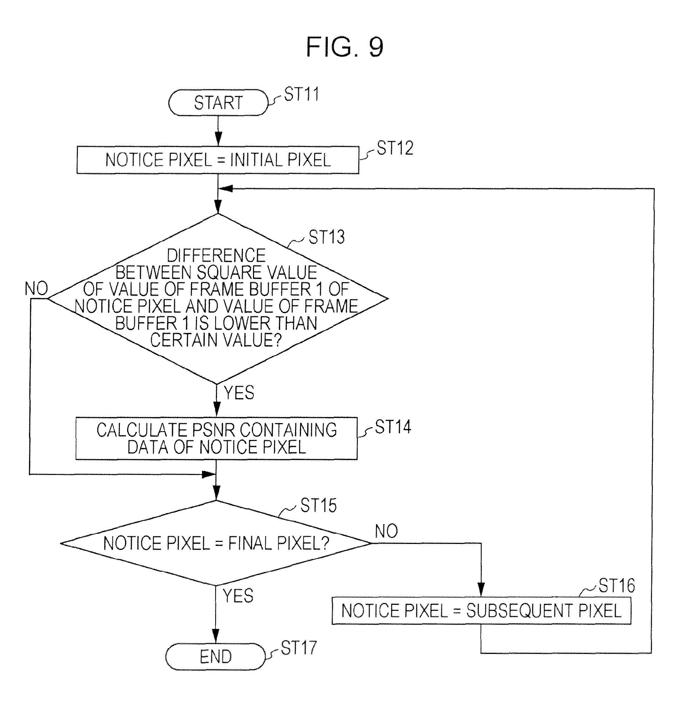

Fig. 9 is a flowchart illustrating the sequence of the PSNR calculation process on each frame by the PSNR calculator 252 of the PSNR processing unit 207 in Fig. 8 in Expressions (6) to (8). The PSNR calculator 252 first starts the process in step ST11. Subsequently, the process proceeds to step ST12. In step ST12, the PSNR calculator 252 sets an initial pixel of an image, for example, an upper left pixel to the notice pixel.

Subsequently, in step ST13, the PSNR calculator 252 determines whether the difference value between the output data of the notice pixel of the square calculator 246 and the stored data read from the frame buffer memory 250 is equal to or less than a fixed value. When the difference value is equal to or less than the fixed value, the PSNR calculator 252 determines that the notice pixel is a pixel of the still image region, and then the process proceeds to step ST14. In step ST14, the PSNR calculator 252 executes the calculation of Expressions (6) to (8) to calculate the PSNR by using the or the notice pixel and the or all pixels determined as pixels of the still image region until the data.

The PSNR calculator 252 permits the process to proceed to step ST15 after the process of step ST14. Alternatively, when the determination results are larger than then fixed value in step ST13, the PSNR calculator 252 immediately permits the process to proceed to step ST15. In step ST15, the PSNR calculator 252 determines whether the present notice pixel is the final pixel in the image. When the present notice pixel is not the final pixel, the PSNR calculator 252 sets the next pixel of the image to the notice pixel in step ST16, and then the process proceeds to step ST13. Alternatively, when the present notice pixel is the final pixel in step ST15, the PSNR calculator 252 terminates the process in step ST17.

In the sequence of the PSNR calculation process in Fig. 9, the PSNR calculated finally in step ST14 is used as the final PSNR. The PSNR processing unit 207 in Fig. 8 has a configuration using the IIR filter. Therefore, it is possible to reduce the memory capacity in comparison to the PSNR processing unit 207 in Fig. 6.

Operation of Image Transmitting System

The operation of the image transmitting system 10 (which includes the video storage apparatus 100 in Fig. 2 and the monitor apparatus 200 in Fig. 4) in Fig. 1 will be described. First, the operation of data streaming transmission from the video storage apparatus 100 to the monitor apparatus 200 will be described. When the video storage apparatus 100 receives an instruction to reproduce predetermined image contents stored in the storage unit 104 by the operation of the user, the image data of the predetermined image contents is read from the storage unit 104 and is supplied to the image processing unit 105. The image processing unit 105 executes the decoding process on the image data read from the storage unit 105 to obtain reproduction image data of non-compression (baseband).

The reproduction image data obtained by the image processing unit 105 is supplied to the image encoding unit 107. The image encoding unit 107 executes a wireless encoding process on the reproduction image data obtained by the image processing unit 105 to obtain the encoded image data. The encoded image data is supplied to the wireless transmitting unit 108. The wireless transmitting unit 108 generates the wireless packet for data streaming transmission containing the image data output from the image encoding unit 107. The wireless packet is wirelessly transmitted from the wireless transmitting unit 108 to the monitor apparatus 200.

The wireless receiving unit 204 of the monitor apparatus 200 receives the wireless packet for data streaming transmission wirelessly transmitted from the video storage apparatus 0. The image data extracted from each wireless packet by the wireless receiving unit 204 is supplied to the image decoding unit 205. The image decoding unit 205 executes the decoding process, which is an opposite process to the process of the image encoding unit 107 of the above-described video storage apparatus 100, on the image data obtained by the wireless receiving unit 204 to obtain the received image data.

The received image data obtained by the image decoding unit 205 is supplied to the display processing unit 208. The display processing unit 208 executes processes such as color adjustment, contour enhancement, and superposition of graphics data on the received image data obtained by the image decoding unit 205 by the operation of the user. The display panel 209 displays the received image of the image data processed by the display processing unit 208.

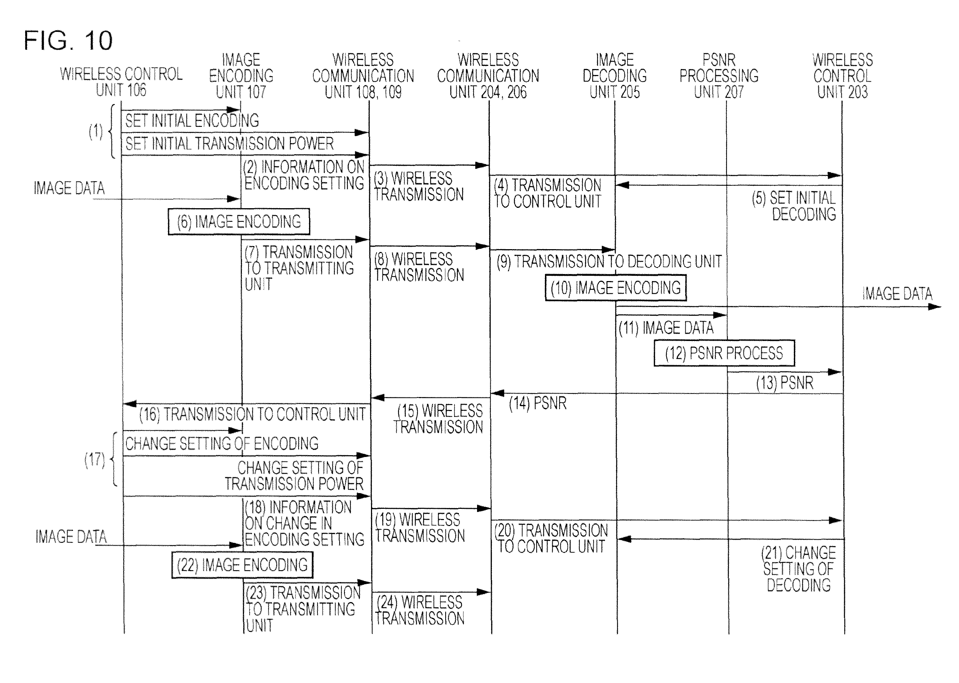

Next, the operations of the encoding setting and the transmission power setting in the video storage apparatus 100 will be described with reference to the flowchart of Fig. 10.

(1) The wireless control unit 106 of the video storage apparatus 100 executes initial encoding setting of the image encoding unit 107 and also executes initial transmission power setting of the wireless transmitting unit 108.
(2) The initial encoding setting information of the image encoding unit is transmitted to the wireless control communication unit 109.
(3) The initial encoding setting information is contained in the wireless packet for control information transmission from the wireless control communication unit 109 and is wirelessly transmitted to the monitor apparatus 200.
(4) The initial encoding setting information received by the wireless control communication unit 206 of the monitor apparatus 200 is transmitted to the wireless control unit 203.
(5) The wireless control unit 203 executes the initial decoding setting of the image decoding unit 205 on the basis of the initial encoding setting information. That is, the decoding setting of the image decoding unit 205 is executed so as to correspond to the encoding setting of the image encoding unit 107 of the video storage apparatus 100.
(6) In the video storage apparatus 100, the initial encoding setting and the initial transmission power setting are executed, as described above, and then the image encoding unit 107 executes wireless encoding on the transmitted image data (the reproduction image data).
(7) The image data is transmitted from the image encoding unit 107 to the wireless transmitting unit 108.
(8) The image data is contained in the wireless packet for data streaming transmission by the wireless transmitting unit 108 and is wirelessly transmitted to the monitor apparatus 200.
(9) The image data received by the wireless receiving unit 204 of the monitor apparatus 200 is transmitted to the image decoding unit 205.
(10) The image decoding unit 205 decodes the image data to obtain the received image data.
(11) The received image data obtained by the image decoding unit 205 is transmitted to the PSNR processing unit 207.
(12) The PSNR processing unit 207 processes the received image data to calculate the PSNR as the detection information regarding the state of the transmission path in each frame.

(13) The PSNR calculated by the PSNR processing unit 207 is transmitted to the wireless control unit 203.

(14) The PSNR is transmitted from the wireless control unit 203 to the wireless control communication unit 206.

(15) The PSNR is contained in the wireless packet for control information transmission by the wireless control communication unit 206 and is transmitted to the video storage apparatus 100. Then, the wireless packet is received by the wireless control communication unit 109 of the video storage apparatus 100.

(16) The PSNR received by the wireless control communication unit 109 is transmitted to the wireless control unit 106.

(17) The wireless control unit 106 controls the encoding setting of the image encoding unit 107 and the transmission power of the wireless transmitting unit 108 on the basis of the PSNR. For example, the transmission speed, the transmission power, and the like of the PSNR transmitted from the monitor apparatus 200 are controlled so that the PSNR is about 40 dB. In this case, when the PSNR is smaller than 40 dB, the transmission speed is controlled so as to be decreased or the transmission power is controlled so as to be increased.

(18) Encoding setting change information of the image encoding unit 107 is transmitted to the wireless control communication unit 109.

(19) The encoding setting change information is contained in the wireless packet for control information transmission by the wireless control communication unit 109, and this wireless packet is transmitted to the monitor apparatus 200.

(20) The encoding setting change information received by the wireless control communication unit 206 of the monitor apparatus 200 is transmitted to the wireless control unit 203.

(21) The wireless control unit 203 changes the decoding setting of the image decoding unit 205 on the basis of the encoding setting change information. That is, the decoding setting of the image decoding unit 205 is changed so as to correspond to the encoding setting of the image encoding unit 107 of the video storage apparatus 100.

(22) In the video storage apparatus 100, the encoding setting and transmission power setting are executed, as described, and then the image encoding unit 107 executes the wireless encoding on the transmitted image data (the reproduction image data).

(23) The image data is from the image encoding unit 107 to the wireless transmitted unit 108.

(24) The image data is contained in the wireless packet for data streaming transmission by the wireless transmitting unit 108, and this wireless packet is wireless transmitted to the monitor apparatus 200. Next, the same processes as the above-described processes are executed.

In the image transmitting system 10 in Fug. 1, as described above, tie PSNR processing unit 207 of the monitor apparatus 200 calculates the PSNR as the detection information regarding the state of the wireless transmission path on the basis of the image data of each pixel of the still image region among the received image data. The video storage apparatus. 100 controls the transmission speed or the transmission power by changing the encoding setting of the image encoding unit 107 so that the PSNR is equal to or larger than 40 dB, for example, on the basis of the PSNR calculated by the monitor apparatus 200. Tha PSNR calculated by the monitor apparatus 200 is based on the degree of the deviation from the average value of the pixel data of the pixels in the time direction in the still image region of the received image data. Therefore, the quality of the received image is reflected on the PSNR. Accordingly, the video storage apparatus 100 can appropriately control the transmission speed, the transmission power, and the like on the basis of the PSNR.

2. Modified Examples

Modified Example 1

In the above-described embodiment, the PSNR processing unit 207 of the monitor apparatus 200 determines whether each pixel of the image is a pixel of the still image region. This determination may be executed in the video storage apparatus 100.

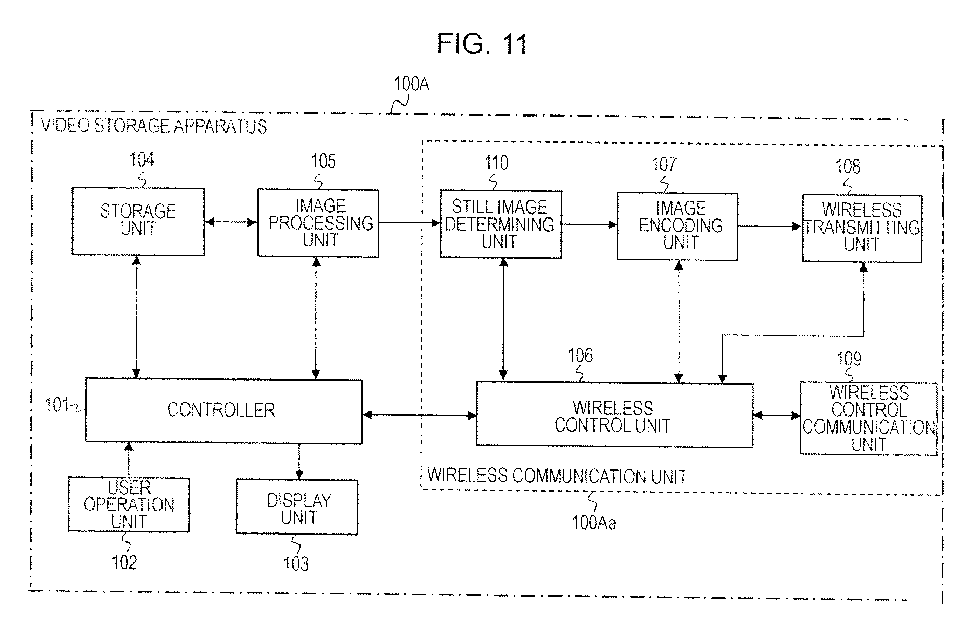

Fig. 11 is a diagram illustrating an exemplary configuration of a video storage apparatus 100A executing the determination whether each pixel of the image is pixel of the still image region. In Fig. 11, the same reference numerals are given to the units corresponding to the units in Fig. 2, and the detailed description is appropriately omitted. The video storage apparatus 100A includes a controller 101, a user operation unit 102, a display unit 103, a storage unit 104, and an image processing unit 105. The video storage apparatus 100A also includes a wireless controller 106, an image encoding unit 107, a wireless transmitting unit 108, a wireless control communication unit 109, and a still image determining unit 110. The wireless controller 106, the image encoding unit 107, the wireless transmitting unit 108, the wireless control communication unit 109, and the still image determining unit 110 form a wireless communication unit 10OAa.

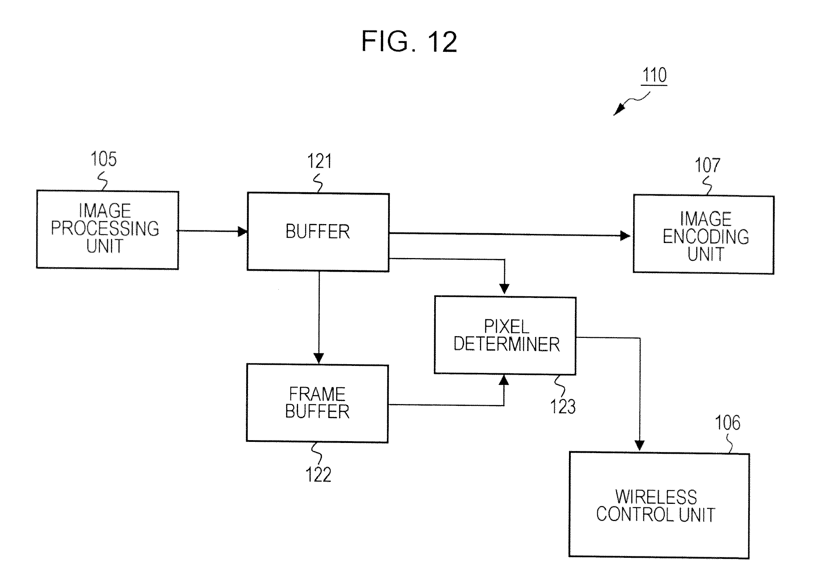

The still image determining unit 110 determines whether each pixel of an image is a pixel of the still image region in each frame on the basis of the reproduction image data of non-compression obtained by the image processing unit 105. The still image determining unit 110 supplies the determination result to the wireless control unit 106. Fig. 12 is a diagram illustrating an exemplary configuration of the still image determining unit 110. The still image determining unit 110 includes a buffer memory 121, a frame buffer memory 122, and a pixel determiner 123.

The buffer memory 121 temporarily stores the reproduction image data obtained by the image processing unit 105. The frame buffer memory 122 temporarily stores the reproduction image data one frame previous. Since the buffer memory 121 and the frame buffer memory 122 are connected to each other in series, the reproduction image data corresponding to one frame stored in the buffer memory 121 is transmitted to the frame buffer memory 122 of the rear stage. Here, when the reproduction image data of the present frame is stored in the buffer memory 221, the reproduction image data one frame previous is stored in the frame buffer memory 122.

The pixel determiner 123 determines whether each pixel of the image is a pixel of the still image region on the basis of the reproduction image data of two continuous frames stored in the buffer memory 121 and the frame buffer memory 122. That is, the pixel determiner 123 sequentially sets each pixel to the notice pixel, evaluates the difference value between the pixel data of the notice pixels of the present frame and the one previous pixel, and makes the determination. When the difference value is equal to or less than a fixed value, the pixel determiner 123 determines that the pixel is the pixel of the still image region and outputs "1" as a determination result. In other cases, the pixel determiner 123 outputs "0" as a determination result.

The determination result whether each pixel of the image obtained in each frame is a pixel of the still image region by the pixel determiner 123 is supplied to the wireless control unit 106. The wireless control unit 106 transmits the determination result of the pixel determiner 123 to the wireless control communication unit 109. The wireless control communication unit 109 transmits the wireless packet for control information transmission containing the determination result (still pixel determination signal) to the monitor apparatus 200.

The other configuration of the video storage apparatus 100A in Fig. 11 is the same as that of the video storage apparatus 100 in Fig. 2.

Next, an exemplary configuration of a PSNR processing unit 207A will be described when a still pixel determination signal of each frame is from the above-described video storage apparatus 100A to the monitor apparatus 200.

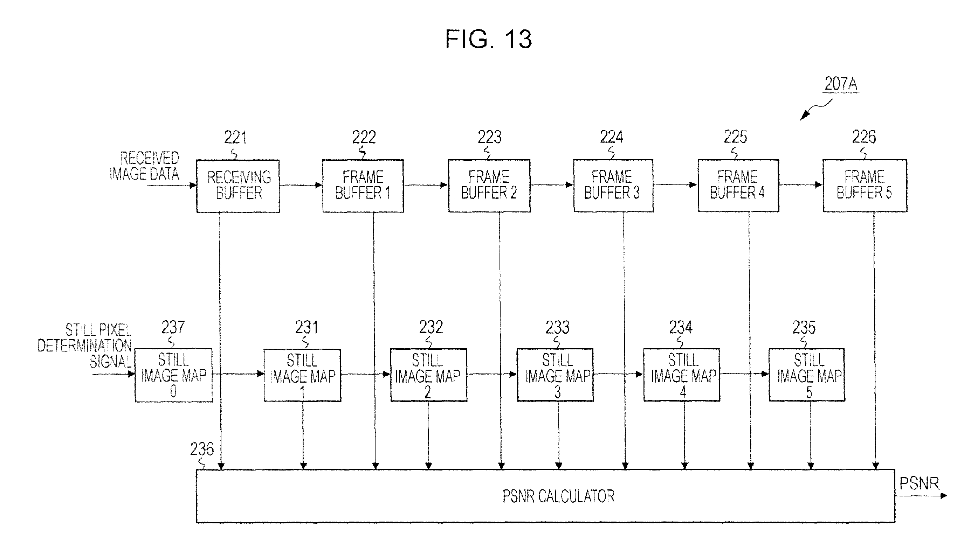

Fig. 13 is a diagram illustrating an exemplary configuration of the PSNR processing unit 207A. In Fig. 13, the same reference numerals are given to units corresponding to the units in Fig. 6, and the detailed description is appropriately omitted. The PSNR processing unit 207A includes the receiving buffer memory 221, the frame buffer memories 222 to 226, the still image map memories 231 to 235 and 237, and the PSNR calculator 236.

The still image map memory 237 temporarily stores the still pixel determination signal received and supplied via the wireless control unit 203 by the wireless control communication unit 206. The still pixel determination signal is the determination result whether each pixel of the image is a pixel of the still image region in each frame, as described above. In this case, the determination result is "1", when each pixel is a pixel of the still image region. In other cases, the determination result is "0".

The still image map memories 231 to 235 temporarily store the still pixel determination signal of the previous frame stored in the still image map memory 237. Since the still image map memory 237 and the still image map memories 231 to 235 are connected to each other in series, the still pixel determination signal corresponding to one frame stored in the still image map memory 237 is transmitted to the still image map memories of the rear stage sequentially.

The other configuration of the PSNR processing unit 207A in Fig. 13 is the same as that of the PSNR processing unit 207 in Fig. 6.

As in the PSNR calculator 236 of the PSNR processing unit 207 in Fig. 6, the PSNR calculator 236 first calculates the PSNR (PSNRY) of luminance data Y, the PSNR (PSNRCB) of blue color difference data, and the PSNR (PSNRCr) of red color difference data of each frame expressed in Expressions (1) to (3) described above. The PSNR calculator 236 calculates an average PSNR (averagePSNRY) of the luminance data Y of each frame expressed in Expression (4) and a total average PSNR (averagePSNRtotal) of a total of the frames expressed in Expression (5) by using the PSNRY, the PSNRCb, and the PSNRCr calculated with the present frame and the previous frame.

The PSNR calculator 236 determines that the notice pixel is pixel of the still image region, when the pixels of an image are set to the notice pixels sequentially and the determination results of the notice pixels stored in the still image map memories 231 to 235 are all "1". The PSNR calculator 236 calculates the PSNR using the pixel data of the present frame of each pixel of the still image region and the reference value, which is an average value of the pixel data of the pixels in the time direction,

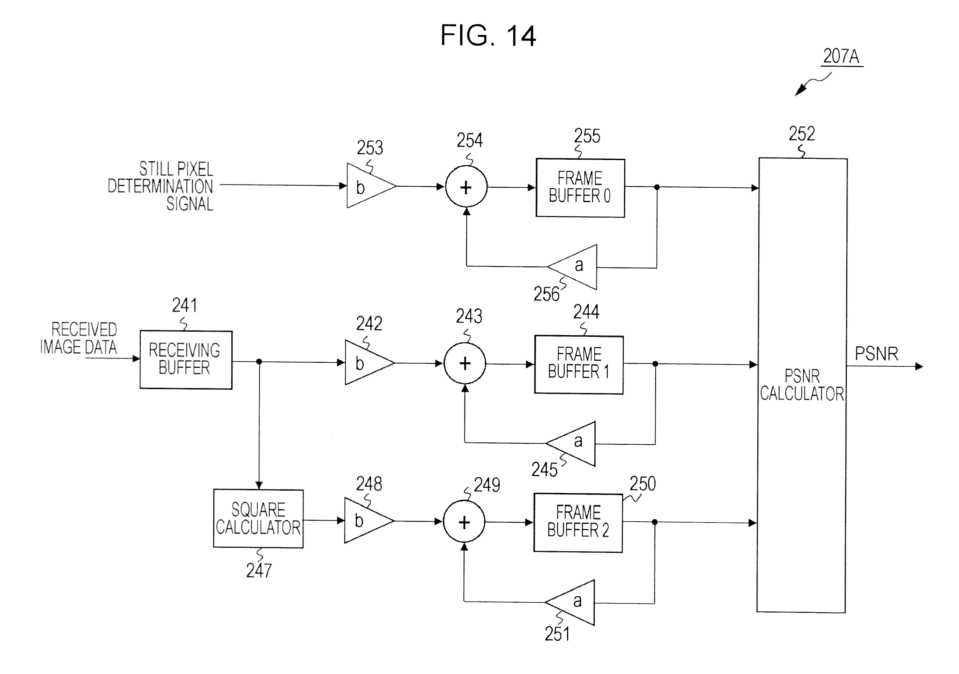

Fig. 14 is a diagram illustrating another exemplary configuration of the PSNR processing unit 207A. In Fig. 14, the same reference numerals are given to units corresponding to the units in Fig. 8, and the detailed description is appropriately omitted. The PSNR processing unit 207A includes the receiving buffer memory 241, the counter 242, an adder 243, the frame buffer memory 244, and the counter 245. Here, the counter 242, the adder 243, the frame buffer memory 244, and the counter 245 form an IIR (Infinite Impulse Response) filter.

The PSNR processing unit 207A includes the square calculator 247, the counter 248, the adder 249, the frame buffer memory 250, the counter 251, and the PSNR calculator 252. Here, the counter 248, the adder 249, the frame buffer memory 250, and the counter 251 form an IIR filter. The PSNR processing unit 207A also includes a counter 253, an adder 254, a frame buffer memory 255, and a counter 256, which form an IIR filter.

The coefficient a is given to the still pixel determination signal received and supplied via the wireless control unit 203 by the wireless control communication unit 206 by the counter 253, and the still pixel determination signal is supplied to the adder 254. As described above, the still pixel determination signal is the determination result whether each pixel of the image is a pixel of the still image region in each frame. When each pixel is a pixel of the still image region, the still pixel determination signal is "1". In other cases, the still pixel determination signal is "0". The storage data of the pixels are sequentially read from the frame buffer memory 255 so as to correspond to the still pixel determination signal,

The coefficient a is given to the stored data of the pixels read from the frame buffer memory 255 by the counter 256, and the stored data is supplied to the adder 254. The adder 254 adds the output data of the counter 256 to the output data of the counter 253, and the added data is written to the same address of the frame buffer memory 255. Therefore, the data stored in the frame buffer memory 255 is data of each pixel obtained by averaging the still pixel determination signals of the pixels in the time direction. The stored data of the pixels read from the frame buffer memory 255 are supplied to the PSNR calculator 252.

The other configuration of the PSNR processing unit 207A in Fig. 14 is the same as that of the PSNR processing unit 207 in Fig. 8.

The PSNR calculator 252 first calculates the PSNR (PSNRY) of the luminance data Y, the PSNR (PSNRCB) of the blue color difference data, and the PSNR (PSNRCr) of the red color difference data of each frame expressed in Expressions (6) to (8) described above. The PSNR calculator 252 calculates an average PSNR (averagePSNRY) of the luminance data Y of each frame expressed in Expression (9) and a total average PSNR (averagePSNRtotal) of a total of the frames expressed in Expression (10) by using the PSNRY, the PSNRCB, and the PSNRCr calculated with the present frame and the previous frame.

The PSNR calculator 252 determines that the notice pixel is a pixel of the still image region, when the pixels of an image are set to the notice pixels sequentially and the stored data read from the frame buffer memory 255 is equal to or less than a fixed value. The PSNR calculator 252 calculates the PSNR using the stored data read from the frame buffer memories 244 and 250, as in the PSNR calculator 252 of the PSNR processing unit 207 in Fig. 8.

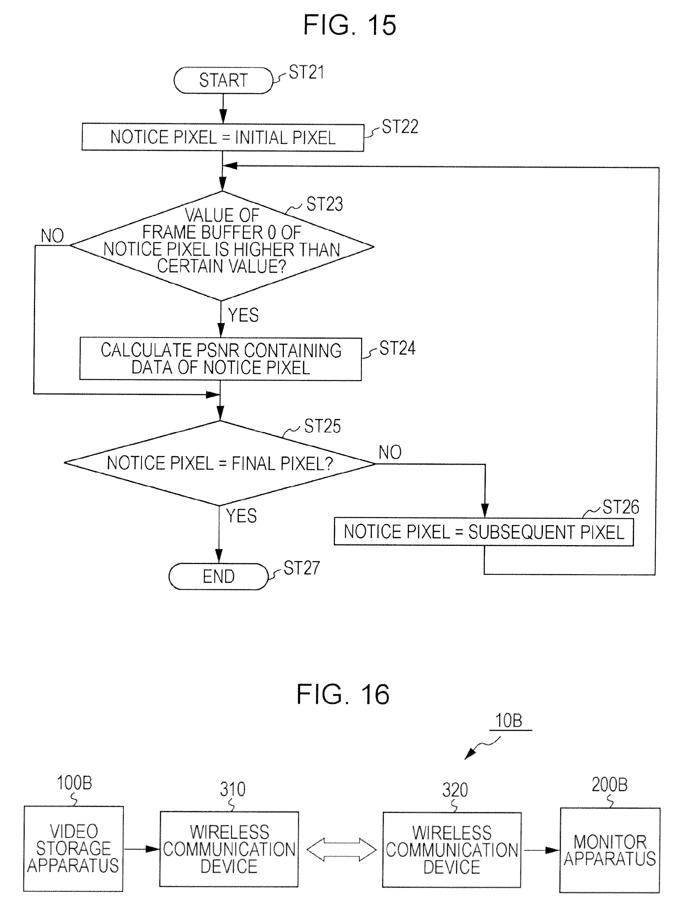

Fig. 15 is a flowchart illustrating the sequence of the PSNR calculation process on each frame by the PSNR calculator 252 of the PSNR processing unit 207A in Fig. 14 in Expressions (6) to (8). The PSNR calculator 252 first starts the process in step ST21. Subsequently, the process proceeds to step ST22. In step ST22, the PSNR calculator 252 sets an initial pixel of an image, for example, an upper left pixel to the notice pixel.

Subsequently, in step ST23, the PSNR calculator 252 determines whether the stored data of the notice pixel read from the frame buffer memory 255 is equal to or larger than a fixed value. When the stored data is equal to or larger than the fixed value, the PSNR calculator 252 determines that the notice pixel is a pixel of the still image region, and then the process proceeds to step ST24. In step ST24, the PSNR calculator 252 executes the calculation of Expressions (6) to (8) to calculate the PSNR by using the data of the notice pixel and the data of all pixels determined as the pixels of the still image region until the data.

The PSNR calculator 252 permits the process to proceed to step S25 after the process of step ST24. Alternatively, when the determination results are smaller than the fixed value in step ST23, the PSNR calculator 252 immediately permits the process to proceed to step ST25. In step ST25, the PSNR calculator 252 determines whether the present notice pixel is the final pixel in the image. When the present notice pixel is not the final pixel, the PSNR calculator 252 sets the next pixel of the image to the notice pixel in step ST26, and then the process proceeds to step ST23. Alternatively, when the present notice pixel is the final pixel in step ST25, the PSNR calculator 252 terminates the process in step ST27.

Modified Example 2

In the above-described embodiment, the case has been described in which the video storage apparatus 100 has the wireless communication unit 100a therein and the monitor apparatus 200 has the wireless communication unit 200a therein. However a wireless communication device may be attached to the outside of at least one of the video storage apparatus and the monitor apparatus.

Fig. 16 is a diagram illustrating an image transmitting system 10B in which a wireless communication device 310 is attached to the outside of the video storage apparatus 100B and a wireless communication device 320 is attached to the outside of the monitor apparatus 200B.

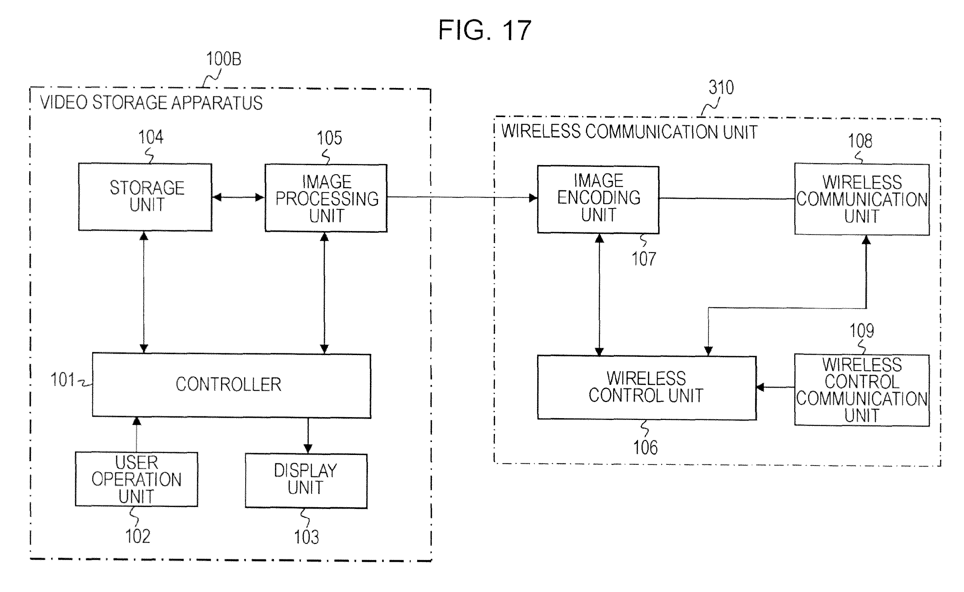

Fig. 17 is a diagram illustrating exemplary configurations of the video storage apparatus 100B and the wireless communication device 310. In Fig. 17, the same reference numerals are given to units corresponding to the units in Fig. 2, and the detailed description is omitted. The video storage apparatus 100B includes the controller 101, the user operation unit 102, the display unit 103, the storage unit 104, and the image processing unit 105. The wireless communication device 310 includes the wireless control unit 106, the image encoding unit 107, the wireless transmitting unit 108, and the wireless control communication unit 109. The wireless communication device 310 corresponds to the wireless communication unit 100a of the video storage apparatus 100 in Fig. 2. The video storage apparatus 100B and the wireless communication device 310 are connected to each other via an HDMI (High Definition Multimedia Interface) cable, for example. Even though the detailed description is omitted, the operations of the video storage apparatus 100B and the wireless communication device 310 are the same as the operation of the video storage apparatus 100 in Fig. 2.

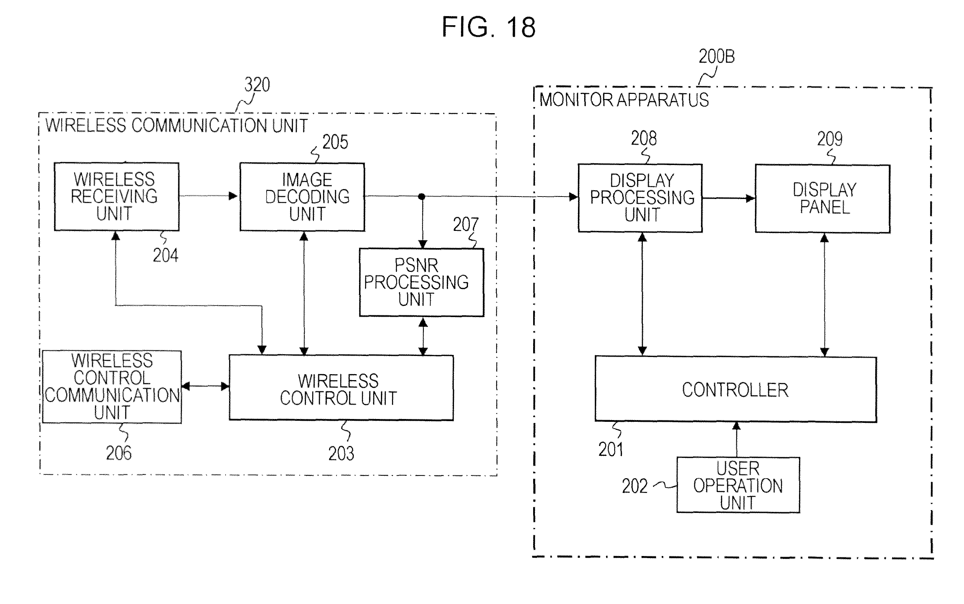

Fig. 18 is a diagram illustrating exemplary configurations of the monitor apparatus 200B and the wireless communication device 320. Fig. 18, the same reference numerals are given to units corresponding to the units in Fig. 4 and the detailed description is omitted. The monitor apparatus 200B includes a controller 201, a user operation unit 202, a display processing unit 208, and a display panel 209. The wireless communication device 320 includes a wireless control unit 203, a wireless receiving unit 204, an image decoding unit 205, a wireless control communication unit 206, and a PSNR processing unit 207. The wireless communication device 320 corresponds to the wireless communication unit 200a of the monitor apparatus. 200 in Fig. 4. The monitor apparatus 2008 and the wireless communication device 320 are connected to each other via an HDMI cable, for example. Even though the detailed description is omitted, the operations of the monitor apparatus 200B and the wireless communication device 320 are the same as the operation of the monitor apparatus 200 in Fig. 4.

Modified Examples 3

In the above-described embodiment, the PSNR processing unit 207 of the monitor apparatus 200 calculates the PSNR, which is the detection information regarding the state of the wireless transmission path by using the image data of each pixel of the still image region among the image data transmitted from the video storage apparatus 100. However a configuration may be taken into consideration in which the still image data of transmission path state detection is transmitted as well as the image data for display from the video storage apparatus 100 to the monitor apparatus 200 and the PSNR processing unit 207 of the monitor apparatus 200 calculates the PSNR using the still image data for transmission path state detection.

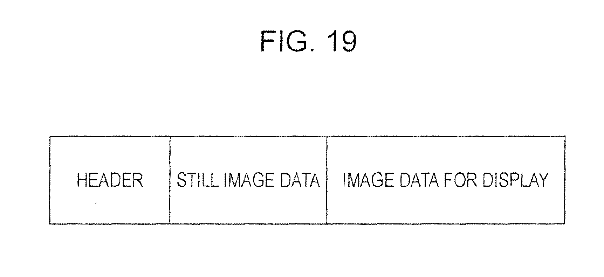

Fig. 19 is a diagram illustrating the overall structure of the wireless packet for data streaming transmission wirelessly transmitted from the video storage apparatus 100 to the monitor apparatus 200. The wireless packet contains a header, the still image data for transmission path state detection after the header, and the image data for display.

In this way, by calculating the PSNR using the still image data for transmission path state detection by the PSNR processing unit 207 of the monitor apparatus 200, the determination whether each pixel of the image is a pixel of the still image region may be omitted. The PSNR can be calculated at high precision without erroneous determination. Therefore, it is possible to control the transmission speed and the transmission power in the video storage apparatus 100 more appropriately.

Other Modified Examples

In the above-described embodiment, the wireless packet for control information transmission containing the PSNR calculated by the PSNR processing unit 207 of the monitor apparatus 200 is transmitted to the video storage apparatus 100. The video storage apparatus 100 controls the transmission speed, the transmission power, or the like so that the PSNR is equal to or larger than 40 dB, for example. In this case, when the encoding setting of the image encoding unit 107 is changed to control the transmission speed, the wireless packet for control information transmission containing the encoding setting change information is transmitted from the video storage apparatus 100 to the monitor apparatus 200. The monitor apparatus 200 changes the decoding setting of the image decoding unit 205 so as to correspond to the encoding setting on the basis of the encoding setting change information.

However, the PSNR may not be transmitted from the monitor apparatus 200 to the video storage apparatus 100, but the following method may be taken into consideration. That is, when the calculated PSNR is smaller than 40 dB, for example, the monitor apparatus 200 changes the decoding setting of the image decoding unit 205 into the decoding setting corresponding to the encoding setting in which the transmission speed can be decreased so as to increase the PSNR. The wireless packet for control information transmission containing the decoding setting change information is transmitted from the monitor apparatus 200 to the video storage apparatus 100. The video storage apparatus 100 changes the encoding setting of the image encoding unit 205 so as to correspond to the decoding setting on the basis of the decoding setting change information.

In the above-described embodiment, the video storage apparatus 100 controls the transmission speed and the transmission power on the basis of the PSNR transmitted from the monitor apparatus 200. As well as the transmission speed and the transmission power, a method of controlling a change in a transmission channel may be taken into consideration.

In the above-described embodiment, the monitor apparatus 200 calculates the PSNR as the detection information regarding the state of the wireless transmission path. However, the detection information may not contain the PSNR, but may contain information similar to the PSNR. That is, the detection information may be information detected on the basis of the degree of deviation from the average value of the pixel data of the pixels in the time direction in the still image region in the image data received in the monitor apparatus 200.

In the above-described embodiment, the image transmitting apparatus is the video storage apparatus 100 and the image receiving apparatus is the monitor apparatus 200. However, the image transmitting apparatus and the image receiving apparatus are not limited thereto, but the invention is applicable to an image transmitting system having the same configuration.

The present application contains subject matter related to that disclosed ion Japanese Priority Patent Application JP 2009-163124 filed in the Japan Patent Office on July 9, 2009.

It should be understood by those skilled in the art that various modifications, combinations, sub-combinations and alterations may occur depending on design requirements and other factors insofar as they are within the scope of the appended claims or the equivalents thereof,

**Claims**

1. An receiving apparatus comprising:

   an image data receiver (204) which receives image data wirelessly transmitted from an external apparatus (100); and
   a transmission path state detector (207) which detects a state of a wireless transmission path on the basis of a degree of deviation from an average value of pixel data of pixels in a time direction in a still image region of the image data received by the image data receiver (204).

2. The image receiving apparatus according to claim 1, wherein the transmission path state detector (207) calculates a PSNR using the pixel data of each pixel of the still image region and a reference value, which is the average value of the pixel data of the pixels in the time direction, and sets the calculated PSNR to detection information.

3. The image receiving apparatus according to claim 1 or 2, further comprising:

   a still image determiner which determines whether each pixel of an image is a pixel of the still image region on the basis of the image data received by the image data receiver (204),
   wherein the transmission path state detector (207) uses the determination result of the still image determiner as information regarding the still image region.

4. The image receiving apparatus according to claim 3, further comprising:

   a predetermined number of frame buffers (222-226) which store the image data of a predetermined number of continuous frames received by the image data receiver (204) and;
   a pixel determiner (227) which determines whether each pixel of the image is a pixel of the still image region by using the image data of two continuous frames received by the image data receiver (204); and
   a predetermined number of still image map storages (231-235) which store the determination result of a predetermined number of continuous frames in the pixel determiner (227),
   wherein the still image determiner sequentially sets the pixels to notice pixels and determines that the notice pixels are pixels of the still image region when the determination results of the notice pixels stored in the predetermined number of still image map storages (231-235) are all pixels of the still image region, and
   wherein the transmission path state detector (207) calculates the PSNR using the image data of the predetermined number of continuous frames stored in the predetermined number of frame buffers (222-226).

5. The image receiving apparatus according to claim 3, further comprising:

   a first IIR filter (242, 243, 244, 245) which averages the pixel data of the pixels of the image data received by the image data receiver (204) in the time direction;
   a first square calculator (246) which squares output data of the first IIR filter (242, 243, 244, 245);
   a second square calculator (247) which squares the pixel data of the pixels of the image data received by the image data receiver (204); and
   a second IIR filter (248, 249, 250, 251) which averages output data of the second square calculator (247) in the time direction,
   wherein the still image determiner sequentially sets the pixels to the notice pixels and determines that the notice pixels are pixels of the still image region when a difference value between the output data of the first square calculator (246) and output data of the second IIR filter (248, 249, 250, 251) is equal to or smaller than a fixed value, and
wherein the transmission path state detector (252) calculates the PSNR using the output data of the first IIR filter (242, 243, 244, 245) and the output data of the second IIR filter (248, 249, 250, 251).

6. The image receiving apparatus according to claim 1 or 2, further comprising:

an information receiver which wirelessly receives determination information, which indicates whether each pixel of the image is a pixel of the still image region, from the external apparatus,
wherein the transmission path state detector (207) uses the determination information received by the information receiver as information regarding the still image region.

7. The image receiving apparatus according to claim 6, further comprising:

a predetermined number of frame buffers (222-226) which store the image data of a predetermined number of continuous frames received by the image data receiver (204); and
a predetermined number of still image map storages (231-235) which store the determination information of a predetermined number of continuous frames received by the information receiver,
wherein the still image determiner sequentially sets the pixels to notice pixels and determines that the notice pixels are pixels of the still region when the determination results of the notice pixels stored in the predetermined number of still image map storages (231-235) are all pixels of the still image region, and
wherein the transmission path detector. (207A) calculates the PSNR using the image data of the predetermined number of continuous frames stored in the predetermined number of frame buffers (222-226).

8. The image receiving apparatus according to claim 6, further comprising:

a first IIR filter (242-245) which averages the pixel data of the pixels of the image data received by the image data receiver (204) in the time direction;
a first square calculator which squares output data of the first IIR filter (242-245);
a second square calculator (247) which squares the pixel data of the pixels of the image data received by the image data receiver (204);
a second IIR filter (248-251) which averages output data of the second square calculator (247) in the time direction; and
a third IIR filter (253-256) which averages the determination information of the pixels received by the information receiver in the time direction,
wherein the determination information of each pixel is data with a 0 value when it is determined that each pixel is not a pixel of the still image region, and is data with a value larger than the 0 value when it is determined that each pixel is a pixel of the still image region,
wherein the still image determiner sequentially sets the pixels to the notice pixels and determines that the notice pixels are pixels of the still image region, when output data of the third IIR filter (253-256) is equal to or larger than a fixed value, and
wherein the transmission path state detector (207A) the PSNR using the data of the first IIR filter (242-245) and the date of the second IIR filter (248-251).

9. The image receiving apparatus according to claim 1 or 2,
the image data receiver (204) receives image data for and still image data for transmission path state detection thy external apparatus, and
wherein the transmission path state detector (207) detects the of the wireless transmission by the still image data for transmission path state detection received by the image data receiver (204).

10. The image receiving apparatus according to claim 1, further comprising:

an information transmitter which wirelessly transmits detection information of the transmission path state tao eternal (100).

11. An image receiving method comprising the steps of:

receiving image data wirelessly transmitted from an apparatus (100); and
detecting a state of a wireless transmission path on the basis of a degree of deviation from an average value of pixel data of pixels in a time direction in a still image region of the image data received in the step of receiving the image data.

12. An image transmitting apparatus comprising:

an image data transmitter (108) which wirelessly transmits image data to an external apparatus (200);
an information receiver (109) which wirelessly receives detection information, which indicates a state of a wireless transmission path detected on the basis of a degree of deviation from an average value of pixel data of pixels in a time direction in a still image region of the image data received in the external apparatus (200), from the external apparatus (200); and
a wireless controller (106) which controls the image data transmitter (108) on the basis of the detection information received by the information receiver (109) and indicating the state of the wireless transmission path.

13. The image transmitting apparatus according to claim 12, wherein the external apparatus (200) calculates PSNR using the pixel data of each pixel of the still image region and a reference value, which is the average value of the pixel data of the ion the direction, and sets the calculated PSNR to information.

14. The image transmitting apparatus to dais 12 or 13, further comprising:

a pixel determiner (123) which determines whether each pixel of an image is a of the still image region on the basis of the image data wirelessly transmitted from the image data transmitter (108) to the external apparatus (200); and
an information transmitter which wirelessly transmits determination information obtainable the pixel determiner (123) to the external apparatus (200).

# FIG. 1

10

100

VIDEO STORAGE
APPARATUS

100a ～ | WIRELESS
COMMUNICATION
UNIT

⟸⟹

200

MONITOR APPARATUS

WIRELESS
COMMUNICATION
UNIT | ～ 200a

# FIG. 2

VIDEO STORAGE APPARATUS 100

STORAGE UNIT 104 → IMAGE PROCESSING UNIT 105

IMAGE ENCODING UNIT 107 → WIRELESS TRANSMITTING UNIT 108

CONTROLLER 101

WIRELESS CONTROL UNIT 106

WIRELESS CONTROL COMMUNICATION UNIT 109

USER OPERATION UNIT 102

DISPLAY UNIT 103

WIRELESS COMMUNICATION UNIT 100a

EP 2 285 116 A2

# FIG. 3

107

Vin → IMAGE PROCESSOR (111) → ENCODER (112-1) / ENCODER (112-2) / ENCODER (112-n) → Vout

# FIG. 4

MONITOR APPARATUS 200

- 204 WIRELESS RECEIVING UNIT
- 205 IMAGE DECODING UNIT
- 207 PSNR PROCESSING UNIT
- 208 DISPLAY PROCESSING UNIT
- 209 DISPLAY PANEL
- 206 WIRELESS CONTROL COMMUNICATION UNIT
- 203 WIRELESS CONTROL UNIT
- WIRELESS COMMUNICATION UNIT
- 200a
- 201 CONTROLLER
- 202 USER OPERATION UNIT

EP 2 285 116 A2

# FIG. 5

205

211-1

ENCODER

211-2

Vin → ENCODER

•
•
•

211-n

ENCODER

212

IMAGE
PROCESSOR → Vout

# FIG. 6

EP 2 285 116 A2

# FIG. 7

START — ST1

↓

NOTICE PIXEL = INITIAL PIXEL — ST2

↓

ST3

ALL OF MAP 1 TO MAP 5 OF NOTICE PIXEL ARE "1"?

NO →

↓ YES

CALCULATE PSNR CONTAINING DATA OF NOTICE PIXEL — ST4

↓

ST5

NOTICE PIXEL = FINAL PIXEL?

NO →

↓ YES

NOTICE PIXEL = SUBSEQUENT PIXEL — ST6

END — ST7

# FIG. 8

EP 2 285 116 A2

# FIG. 9

START — ST11

NOTICE PIXEL = INITIAL PIXEL — ST12

ST13

DIFFERENCE BETWEEN SQUARE VALUE OF VALUE OF FRAME BUFFER 1 OF NOTICE PIXEL AND VALUE OF FRAME BUFFER 1 IS LOWER THAN CERTAIN VALUE?

NO

YES

CALCULATE PSNR CONTAINING DATA OF NOTICE PIXEL — ST14

ST15

NOTICE PIXEL = FINAL PIXEL?

NO

YES

NOTICE PIXEL = SUBSEQUENT PIXEL — ST16

END — ST17

# FIG. 10

EP 2 285 116 A2

# FIG. 11

EP 2 285 116 A2

# FIG. 12

EP 2 285 116 A2

## FIG. 13

207A

RECEIVED IMAGE DATA →

221 RECEIVING BUFFER
222 FRAME BUFFER 1
223 FRAME BUFFER 2
224 FRAME BUFFER 3
225 FRAME BUFFER 4
226 FRAME BUFFER 5

STILL PIXEL DETERMINATION SIGNAL →

237 STILL IMAGE MAP 0
231 STILL IMAGE MAP 1
232 STILL IMAGE MAP 2
233 STILL IMAGE MAP 3
234 STILL IMAGE MAP 4
235 STILL IMAGE MAP 5

236 PSNR CALCULATOR → PSNR

EP 2 285 116 A2

# FIG. 14

207A

STILL PIXEL DETERMINATION SIGNAL → b 253 → + 254 → FRAME BUFFER 0 255

256 a

RECEIVED IMAGE DATA → RECEIVING BUFFER 241 → b 242 → + 243 → FRAME BUFFER 1 244

245 a

SQUARE CALCULATOR 247 → b 248 → + 249 → FRAME BUFFER 2 250

251 a

252 PSNR CALCULATOR → PSNR

EP 2 285 116 A2

32

# FIG. 15

START — ST21

NOTICE PIXEL = INITIAL PIXEL — ST22

VALUE OF FRAME BUFFER 0 OF NOTICE PIXEL IS HIGHER THAN CERTAIN VALUE? — ST23

NO

YES

CALCULATE PSNR CONTAINING DATA OF NOTICE PIXEL — ST24

NOTICE PIXEL = FINAL PIXEL? — ST25

NO

NOTICE PIXEL = SUBSEQUENT PIXEL — ST26

YES

END — ST27

# FIG. 16

10B

| 100B | 310 | 320 | 200B |
|---|---|---|---|
| VIDEO STORAGE APPARATUS | WIRELESS COMMUNICATION DEVICE | WIRELESS COMMUNICATION DEVICE | MONITOR APPARATUS |

# FIG. 17

VIDEO STORAGE APPARATUS 100B

| 104 STORAGE UNIT |
| 105 IMAGE PROCESSING UNIT |

101 CONTROLLER

102 USER OPERATION UNIT

103 DISPLAY UNIT

WIRELESS COMMUNICATION UNIT 310

107 IMAGE ENCODING UNIT

108 WIRELESS COMMUNICATION UNIT

106 WIRELESS CONTROL UNIT

109 WIRELESS CONTROL COMMUNICATION UNIT

EP 2 285 116 A2

# FIG. 18

EP 2 285 116 A2

# FIG. 19

| HEADER | STILL IMAGE DATA | IMAGE DATA FOR DISPLAY |
|--------|------------------|------------------------|

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005341031 A
- JP 2004064300 A

- JP 2009163124 A

**Non-patent literature cited in the description**

- **Fran Fitzek ; Patric Seeling ; Martin Reisslein.** VideoMeter tool for YUV bitstreams. *Technical Report acticom -02-001,* 05 October 2002